# FASCICULE DE BREVET EUROPEEN

(11) **EP 0 530 061 B1**
(45) Date de publication et mention de la délivrance du brevet: **09.11.1994**
(21) Numéro de dépôt: 92402132.2
(22) Date de dépôt: 23.07.1992
(51) Int. Cl.: H02J 7/24, H02P 9/30

(54) **Circuit régulateur de la tension de charge d'une batterie par un alternateur**
Schaltung zur Regelung der Ladespannung einer mittels eines Generators gespeisten Batterie
Charging voltage control circuit for an alternator supplied battery

(30) Priorité: 25.07.1991 FR 9109445
(43) Date de publication de la demande: 03.03.1993
(73) Titulaire: VALEO EQUIPEMENTS ELECTRIQUES MOTEUR, 94000 Créteil (FR)
(72) Inventeur: Pierret, Jean-Marie, F-75012 Paris (FR); Rechdan, Raymond, F-94410 Saint-Maurice (FR)
(74) Mandataire: Martin, Jean-Jacques

(56) Documents cités:
- EP-A- 0 087 583
- EP-A- 0 106 539
- EP-A- 0 339 576
- WO-A-88/01110
- WO-A-88/01110
- WO-A-88/01110
- DE-A- 3 815 842
- DE-A- 3 914 863
- GB-A- 1 602 977
- GB-A- 2 070 297

## Description

La présente invention concerne d'une façon générale un dispositif régulateur de la tension de charge d'une batterie par un alternateur.

Dans un régulateur classique, on compare la tension de sortie de l'alternateur, par exemple la tension D+ disponible au point commun des diodes dites "trio" d'un alternateur triphasé, avec une tension de seuil fixe. En amont du circuit comparateur, on élimine par filtrage l'essentiel de la composante ondulatoire de la tension D+ et en aval de la comparaison, on prévoit un circuit de puissance qui ouvre et ferme un circuit d'alimentation de l'enroulement d'excitation de l'alternateur en fonction du résultat de la comparaison.

Concrètement, un circuit régulateur conventionnel peut comprendre un circuit intégrateur-comparateur associé à un trigger, qui a pour objet d'éviter que les ouvertures/fermetures dudit circuit d'alimentation se fassent à une cadence excessivement rapide. Un inconvénient d'un tel circuit réside en ce que, lorsque le débit ou la charge de l'alternateur augmente, la valeur moyenne de la tension régulée baisse.

Il est connu pour pallier ce phénomène d'apporter au niveau de la tension appliquée au circuit intégrateur-comparateur une correction appropriée permettant d'obtenir, dans tous les régimes de fonctionnement, une valeur moyenne de tension régulée sensiblement constante.

Cette correction peut être apportée en captant le courant qui circule dans l'enroulement d'excitation et en superposant à la tension à réguler une tension continue fonction de cette information.

Une technique classique pour ce faire consiste à prévoir une résistance de shunt en série avec l'enroulement, et à utiliser la tension aux bornes de ce shunt comme information représentative du courant dans l'alternateur. On se réfèrera par exemple à WO-A-88 01110.

Cette solution présente cependant des inconvénients. Tout d'abord, la présence du shunt implique une dissipation d'énergie par effet joule qui peut s'avérer gênante. Ensuite, le circuit de traitement branché aux bornes du shunt, qui doit être à même de traiter une différence de potentiel flottante, est relativement coûteux.

On connaît également par DE-A-3 815 842 un circuit dans lequel un transistor commandé en parallèle avec le transistor de puissance qui commande le courant dans l'enroulement d'excitation alimente un circuit résistif.

La présente invention vise à pallier ces inconvénients. Elle propose à cet effet un circuit régulateur de la tension de charge d'une batterie par un alternateur tel que défini dans la revendication 1.

Des aspects préférés de l'invention sont exposés dans les sous-revendications.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :
la figure 1 est un schéma électrique de l'ensemble d'un circuit régulateur selon la présente invention, et
la figure 2 est un schéma électrique détaillé d'une partie du circuit de la figure 1.

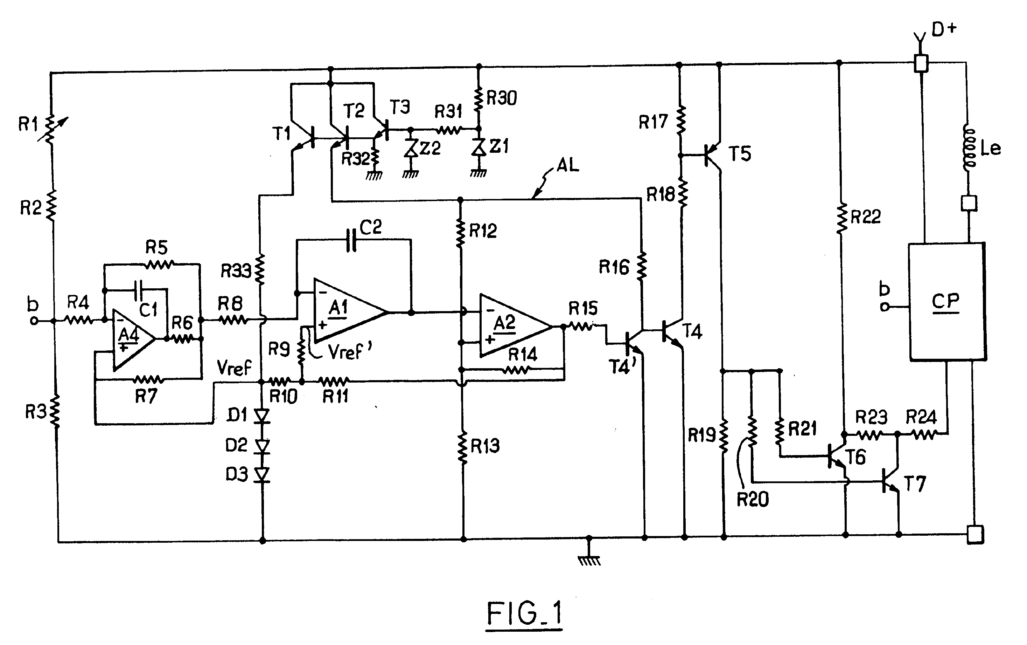

En référence tout d'abord à la figure 1, la tension D+ issue du point commun des diodes trio (non représentées) d'un alternateur triphasé est appliquée à un pont diviseur ajustable comprenant une résistance ajustable R1 et des résistances fixes R2 et R3, en série. Le point commun entre R2 et R3, noté "b", est appliqué à l'entrée inverseuse d'un amplificateur opérationnel A4 via une résistance R4. Un condensateur C1 est monté entre la sortie de A4 et son entrée inverseuse. La sortie de A4 est en outre reliée à une première borne d'une résistance R6. La seconde borne de R6 est reliée d'une part à l'entrée inverseuse de A4 via une résistance R5 et d'autre part à l'entrée non-inverseuse de A4 via une résistance R7.

Le signal présent sur la seconde borne de R6 est appliqué à l'entrée inverseuse d'un deuxième amplificateur opérationnel A1 via une résistance R8. L'entrée non inverseuse de A1 est reliée via une résistance R9 aux premières bornes de deux résistances R10 et R11. La seconde borne de R10 est reliée à la masse via trois diodes D1, D2, D3 reliées en série dans le sens passant, et à l'entrée non-inverseuse de A4. Un condensateur C2 est monté entre la sortie de A1 et son entrée inverseuse. La sortie de A1 est reliée directement à l'entrée inverseuse d'un troisième amplificateur opérationnel A2. L'entrée non-inverseuse de A2 est reliée au point commun d'un pont diviseur de tension constitué par deux résistances R12 et R13 en série entre une ligne d'alimentation continue stabilisée AL et la masse. La sortie de A2 est reliée à son entrée non-inverseuse via une résistance R14, et directement à la seconde borne de R11.

La sortie de A2 attaque via une résistance R15 la base d'un transistor bipolaire NPN T4′ dont l'émetteur est à la masse et dont le collecteur est relié via une résistance R16 à la ligne AL précitée. Le collecteur de T4′ attaque la base d'un autre transistor NPN T4, dont l'émetteur est à la masse. Un montage série d'une résistance R17 et d'une résistance R18 est prévu entre la ligne de tension D+ et le collecteur de T4. Le point commun entre R17 et R18 est relié à la base d'un transistor PNP T5 dont l'émetteur est relié à la ligne D+ et dont le collecteur est relié à la masse via une résistance R19. Ce collecteur est également relié aux bases de deux transistors NPN T6 et T7 respectivement via deux résistances R20 et R21. Les émetteurs de T6 et T7 sont à la masse. Le collecteur de T6 est relié à la ligne D+ via une résistance R22. Une résistance R23 relie les collecteurs de T6 et T7. Une résistance R24 relie le collecteur de T7 à une borne d'un circuit de puissance CP pour la commande du courant d'excitation Ie circulant dans un enroulement d'excitation Le de l'alternateur et comprenant, comme on le verra en détail plus loin, des moyens pour dériver une information représentative de ce courant Ie. L'enroulement Le est branché entre le circuit CP et la ligne D+. Le circuit CP est également relié directement à la ligne D+ et à la masse.

Un montage série d'une résistance R30 et d'une diode zéner Z1 est relié entre la ligne D+ et la masse. Le point commun entre R30 et Z1 est relié via une résistance R31 à la base d'un transistor NPN T3. Une diode zéner Z2 est montée entre la base de T3 et la masse. L'émetteur de T3 est relié à la masse via une résistance R32 et directement à la base d'un transistor NPN T2. Les collecteurs de T2 et de T3 sont reliés à la ligne D+, tandis que l'émetteur de T2 est relié à la ligne d'alimentation stabilisée AL.

La base de T2 est reliée à la base d'un autre transistor NPN T1 dont le collecteur est relié au collecteur de T3 et dont l'émetteur est relié à la seconde borne de R10 via une résistance R33.

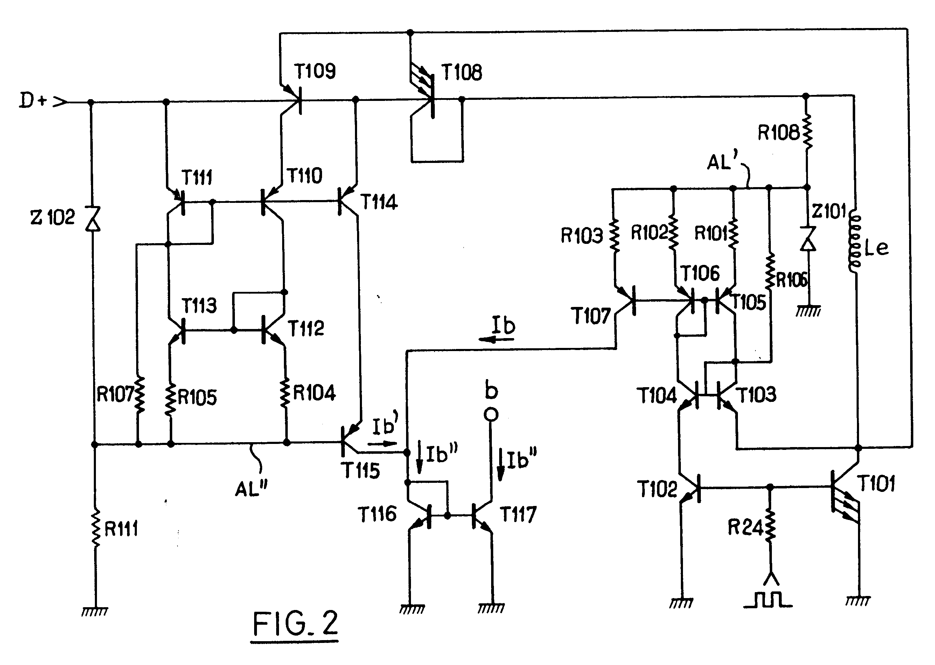

On va maintenant décrire en détail en référence à la figure 2 le circuit de puissance CP.

L'enroulement d'excitation Le est branché entre la ligne D+ et le collecteur d'un transistor de puissance multi-émetteurs T101 de type NPN dont les émetteurs sont reliés à la masse. Les signaux de commande issus du transistor T7 de la figure 1 sont appliqués à la base de T101 via la résistance R24. Le collecteur de T101 est relié à une première borne de Le, dont la seconde borne est reliée à la ligne D+.

Un transistor NPN T102 a sa base reliée à celle de T101 et son émetteur relié à la masse. De façon préférée, dans le cas d'une réalisation intégrée, T102 est constitué par une cellule individuelle du transistor multi-cellules T101.

Le collecteur de T102 est relié à l'émetteur d'un transistor NPN T104. La base de T104 est reliée à la base d'un transistor identique T103 dont l'émetteur est relié au collecteur de T101. Le collecteur de T103 est relié à sa base.

Les collecteurs de T103 et T104 sont reliés respectivement aux collecteurs de deux transistors T105, T106 de type PNP, dont les bases sont reliées l'une à l'autre ainsi qu'au collecteur de T106.

Les émetteurs de T105 et T106 sont reliés à une ligne d'alimentation continue stabilisée AL′ respectivement via deux résistances R101 et R102. Cette ligne AL′ est reliée au point commun entre une résistance R108 et une diode zéner Z101 montées en série entre la ligne D+ et la masse. Les collecteurs de T103 et T105 sont également reliés à la ligne AL′ via une résistance R106.

Un transistor PNP T107 a sa base reliée à celles de T105 et T106 et son émetteur est relié à la ligne AL′ via une résistance R103.

Le transistor multi-émetteurs T108 de type PNP constitue la diode de roue libre de l'enroulement Le. Il est relié par sa base et son collecteur à la ligne D+, et par ses émetteurs à la première borne de Le.

Le transistor T109 est un transistor PNP dont l'émetteur est relié aux émetteurs de T108 et dont la base est reliée à celle de T108.

Dans le cas d'une réalisation intégrée, T109 est de préférence réalisé à partir d'une cellule inviduelle du transistor T108 (de façon analogue aux transistors T101 et T102).

Le collecteur de T109 est relié à l'émetteur d'un autre transistor PNP T110. La base de T110 est reliée aux bases de deux autres transistors PNP T111 et T114 dont les émetteurs sont reliés à la ligne D+. Ces bases sont en outre reliées au collecteur de T111.

Les collecteurs de T110 et T111 sont respectivement reliés aux collecteurs de deux transistors NPN T112 et T113 dont les bases sont reliées entre elles ainsi qu'au collecteur de T112.

Les émetteurs de T112 et T113 sont reliées à une ligne de tension continue stabilisée AL˝ via des résistances respectives R104 et R105. Les collecteurs de T111 et T113 sont également reliés à la ligne AL˝ via une résistance R107.

La ligne AL˝ est reliée au point commun entre une diode zéner Z102 et une résistance R111 montées en série de la ligne D+ vers la masse.

La base d'un transistor PNP T115 est reliée à la ligne AL˝. Son émetteur est relié au collecteur de T114 et son collecteur au collecteur de T107.

On observe que le circuit de la figure 2 comprend deux parties distinctes et semblables respectivement associées aux composants de puissance T101 et T108 (respectivement le circuit construit autour de T102 à T107 et le circuit construit autour de T109-T115).

Les collecteurs de T107 et T115 sont reliés au collecteur d'un transistor NPN T116, à la base de ce dernier ainsi qu'à la base d'un autre transistor NPN T117. Les émetteurs de T116 et T117 sont reliés à la masse. Le collecteur de T117 est relié à une borne "b" correspondant à la borne "b" de la figure 1.

On va maintenant décrire le fonctionnement du circuit selon la présente invention.

Sur la figure 1, le circuit construit autour de T1-T3 est destiné à appliquer sur la ligne d'alimentation AL, à partir de la tension fluctuante D+, une tension continue stable, par exemple de +5 volts. C'est à partir de cette tension stable qu'est élaborée, à l'aide des résistances R12 et R13, la tension de seuil fixe appliquée à l'entrée non inverseuse du comparateur A2. Par ailleurs, T1 alimente les diodes D1 à D3 dans le sens passant via R33, pour fixer sur l'anode de D1 une tension de référence bien déterminée, notée Vref, égale au cumul des tensions de déchet de ces trois diodes.

Bien entendu, on pourra utiliser tout autre moyen approprié pour produire cete tension de référence Vref.

Les amplificateurs opérationnels A1, A2 et A4 peuvent être alimentés à partir du joint commun entre R30 et Z1.

A l'entrée du circuit construit autour de A4 est appliquée la superposition:
- d'une fraction de la tension D+, déterminée par les valeurs de R1 à R3, et
- d'une tension continue de correction appliquée à la borne "b" et dont la valeur est fonction du courant dans l'enroulement d'excitation, comme on va le voir plus loin.

Le circuit construit autour de A4 est un filtre actif passe-bas de type classique en soi destiné à éliminer du signal l'essentiel de sa composante ondulatoire à haute fréquence.

Ce filtre fournit en sortie une tension représentative de la valeur moyenne de D+, corrigée.

Un avantage de l'utilisation d'un filtre actif réside en ce que la capacité de C1 peut être bien inférieure à celle du condensateur d'un filtre passif, ce qui permet à C1 d'occuper une surface de semi-conducteur tout à fait réduite dans le cas de la réalisation intégrée du circuit régulateur.

Le circuit construit autour de A1 et A2 combine un comparateur-intégrateur et un trigger, avec une contre-réaction via la résistance R11. Il se comporte à la manière d'un trigger de Schmidt, c'est-à-dire que les basculements de A2 ont lieu sur deux niveaux d'entrée différents, respectivement inférieur et supérieur, selon que le signal est en phase descendante ou ascendante. Plus précisément, la résistance R11 permet de faire varier, selon l'état de sortie de A2, la tension de référence Vref′ appliquée sur l'entrée non-inverseuse de l'étage intégrateur A1.

Un tel circuit a pour objet essentiel de limiter la fréquence à laquelle s'effectue la régulation et également d'éviter des commutations intempestives déclenchées par d'éventuelles ondulations résiduelles dans le signal appliqué à A1, non supprimées par l'action du filtre construit autour de A4.

La contre-réaction de la sortie de A2 sur A1 via R11 modifie la valeur de la tension de référence, notée Vref′, appliquée à l'entrée non-inverseuse de A1, cette tension Vref′ étant dérivée de Vref via R9 et R10. Ainsi la valeur moyenne de Vref′ augmente en même temps que le rapport cyclique du signal délivré par A2, lui-même essentiellement proportionnel au courant d'excitation. Il est aisé de démontrer que ce phénomène aboutit à une diminution de la valeur moyenne de la tension régulée en fonction de la charge du régulateur (on observe en effet que les étages A1 et A2, du fait de l'inversion de signaux assurée par l'étage A4, travaillent sur des signaux dont l'évolution est l'inverse de celle de la valeur moyenne de D+).

Les étages construits autour de T4′, T4, T5, T6 et T7 permettent de transcrire le basculement de la sortie de A2 au niveau du transistor de puissance T101 inclus dans le circuit de puissance CP. T4′ a pour objet d'effectuer l'inversion logique nécessaire du fait que les composants A1 et A2 travaillent sur des signaux dont l'évolution est inverse de l'évolution de la valeur moyenne de D+.

On observe par ailleurs le montage particulier de T6, T7, R22, R23 et R24. Ce montage vient se substituer à un montage classique dans lequel T7 n'existe pas et est remplacé par une simple résistance, et ce nouveau montage a pour objet d'éviter l'amorçage intempestif du circuit régulateur lorsque la tension D+ comporte des crêtes positives de tension élevées susceptibles d'amorçer T101 pendant que T6 est saturé.

On va maintenant décrire le fonctionnement du circuit de la figure 2.

Lorsqu'un courant circule dans l'enroulement Le et dans le transistor T101, une fraction bien déterminée de ce courant (par exemple un millième de ce courant dans le cas où T101 comporte à la base mille cellules dont une est utilisée pour T102) circule dans T102.

Les transistors T103-T104 et T105-T106 sont deux paires de transistors formant miroirs de courant, montés entre la masse et la ligne AL′, dont la différence de potentiel par rapport à la masse est fixée par la valeur de Z101 et égale par exemple à +5 volts. Ces miroirs de courant ont pour objet de recopier au niveau de T107 le courant qui circule dans T102. De cette manière, T107 délivre par son collecteur un courant Ib proportionnel au courant d'excitation direct (c'est-à-dire au courant qui traverse Le pendant les périodes où T101 est saturé).

De la même manière, le transistor T109 est traversé par une fraction bien déterminée (par exemple un millième) du courant qui traverse la diode de roue libre définie par T108.

Les paires de transistors T110-T111 et T112-T113 constituent des miroirs de courant montés entre la ligne D+ et la ligne AL˝, dont la différence de potentiel par rapport à D+ est maintenue constante par Z102 et par exemple égale à 5 volts. Ces miroirs de courant permettent de recopier dans T114 et T115 le courant qui traverse T109. T115 délivre par son collecteur un courant Ib qui est proportionnel au courant de roue libre circulant dans Le et T108 pendant les périodes où T101 est bloqué.

Les courants délivrés par les collecteurs de T107 et T115 sont réunis et traversent T116, qui forme avec T117 un miroir de courant. T116 et T117 constituent un circuit mélangeur, et T117 soutire donc au point "b" un courant Ib˝ proportionnel au courant circulant dans l'inductance Le.

Grâce à ce circuit, on s'affranchit d'une mesure de courant par prise de tension aux bornes d'un shunt en série avec Le, avec les avantages tels qu'ils ont été mentionnés en introduction.

On a indiqué plus haut que la fraction de la tension D+ appliquée à l'entrée du filtre A4 était corrigée en fonction du débit ou de la charge de l'alternateur. Cette correction est assurée par le courant Ib˝ précité, qui superpose à la tension D+ une composante continue proportionnelle à la valeur de Ib˝ et causée par la circulation de Ib˝ dans R1 et R2.

Ainsi, lorsque la charge de l'alternateur s'accroît, la régulation s'effectue sur une valeur de tension d'entrée qui est décalée vers le bas de façon croissante par rapport à la valeur moyenne de D+. En conséquence, par cette partie spécifique du circuit, la valeur de la tension régulée tend à augmenter progressivement avec la charge de l'alternateur.

On comprend que cette correction de la valeur moyenne régulée permet de compenser l'effet inverse obtenu comme décrit plus haut par les circuits A1 et A2, et en fin de compte le circuit de l'invention permet d'obtenir une valeur régulée essentiellement constante sur toute la plage de fonctionnement de l'alternateur.

Bien entendu, la présente invention n'est nullement limitée à la forme de réalisation décrite ci-dessus et représentée sur les dessins, en particulier, le circuit de régulation sur valeur moyenne tel que décrit ci-dessus peut être complété si on le souhaite par des circuits annexes de détection de crêtes, positives et/ou négatives, de la tension D+, destinés notamment à éviter que cette tension ne comporte une composante ondulatoire excessive risquant d'induire un échauffement excessif des diodes écrêteuses classiquement associées à l'alternateur.

## Revendications

1. Circuit régulateur de la tension de charge d'une batterie par un alternateur, notamment dans un véhicule automobile, du type comprenant :
des moyens de traitement et de comparaison (A4, A1, A2) recevant une fraction déterminée d'une tension (D+) délivrée par l'alternateur et engendrant par eux-mêmes une variation monotone de la tension moyenne régulée en fonction de la charge de l'alternateur,
un semi-conducteur de puissance (T101) monté en série avec un enroulement d'excitation (Le) de l'alternateur et commuté par la sortie des moyens de traitement et de comparaison,
un semi-conducteur de roue libre (T108) monté en parallèle avec l'enroulement d'excitation de l'alternateur,
des moyens de correction (T02-T107, T109-T117) capables de produire un décalage de ladite fraction de tension appliquée aux moyens de traitement et de comparaison, ledit décalage variant de façon monotone avec l'intensité du courant dans l'enroulement d'excitation et la charge de l'alternateur, de manière à compenser ladite variation monotone engendrée par les moyens de traitement et obtenir une valeur moyennne de la tension de charge essentiellement constante sur toute la plage de fonctionnement de l'alternateur,
caractérisé en ce que les moyens de correction sont constitués par des moyens semi-conducteurs sans résistance de shunt en série avec l'enroulement d'excitation comprenant :
un premier semi-conducteur (T102) associé directement audit semi-conducteur de puissance (T101) et apte à être traversé par un premier faible courant proportionnel au courant dans le semi-conducteur de puissance;
un deuxième semi-conducteur (T109) associé audit semi-conducteur de roue libre (T108) et apte à être traversé par un deuxième faible courant proportionnel au courant dans le semi-conducteur de roue libre;
des premiers et deuxièmes moyens formant miroirs de courant (T103-T106, T110-T113) recevant lesdits premier et deuxième faibles courants pour les recopier, respectivement, et
des moyens (T107, T115-T117) pour combiner les premier et deuxièmes faibles courants recopiés, dont la sortie est reliée à l'entrée des moyens de traitement et de comparaison,
lesdits moyens de correction assurant ainsi un décalage de la fraction de tension appliquée aux moyens de traitement et de comparaison qui varie de façon linéaire avec le courant d'excitation.

2. Circuit selon la revendication 1, caractérisé en ce que les premier et deuxième semi-conducteurs (T102, T109) sont traversés alternativement et de manière périodique par lesdits faibles courants respectifs.

3. Circuit selon la revendication 1 ou 2, caractérisé en ce que les moyens de traitement et de comparaison comprennent un filtre actif passe-bas (A4).

4. Circuit selon la revendication 3, caractérisé en ce que les moyens de traitement et de comparaison comprennent un circuit intégrateur (A1) auquel est appliquée une tension de référence et un circuit comparateur (A2) auquel est appliquée une tension de seuil fixe, la tension de référence du circuit intégrateur variant en fonction de l'état de sortie du circuit comparateur.

5. Circuit selon l'une des revendications 1 à 4, caractérisé en ce que le semiconducteur de puissance (T101) et le premier semi-conducteur (T102) d'une part, et le semi-conducteur de roue libre (T108) et le deuxième semiconducteur (T109) d'autre part, sont réalisés sur une même pastille de semi-conducteur et comprennent un grand nombre de cellules dont au moins une constitue le premier, respectivement le deuxième, semi-conducteur.

6. Circuit selon l'une des revendications 1 à 5, caractérisé en ce que les moyens pour combiner les premier et deuxième faibles courants recopiés comprennent un circuit mélangeur (T116, T117).

7. Circuit selon l'une des revendications 1 à 6, caractérisé en ce que les premier et deuxième faibles courants combinés sont soutirés au point milieu d'un pont diviseur (R1-R3) auquel est appliquée la tension à réguler (D+).

8. Circuit selon l'une des revendications 1 à 7, caractérisé en ce que les moyens de traitement et de comparaison commandent en conduction/blocage en parallèle deux transistors (T6, T7), dont le collecteur d'un premier transistor est relié à la tension à réguler via une première résistance (R22), le collecteur du second transistor étant relié au collecteur du premier via une deuxième résistance (R23) et à une entrée de commande du semi-conducteur de puissance via une troisième résistance (R24).

9. Circuit selon l'une des revendications 1 à 8, caractérisé en ce que les moyens de traitement et de comparaison engendrent par eux-mêmes une variation décroissante de la tension moyenne régulée en fonction de la charge de l'alternateur, et en ce que les moyens de correction engendrent par eux-mêmes une tension régulée qui croît avec la charge de l'alternateur.

## Patentansprüche

1. Schaltung zur Regelung der Ladespannung einer mittels eines Generators gespeisten Batterie, insbesondere in einem Kraftfahrzeug, bestehend aus:
Verarbeitungs- und Vergleichseinrichtungen (A4, A1, A2), die einen bestimmten Bruchteil einer durch den Generator gelieferten Spannung (D+) empfangen und selbsttätig eine monotone Änderung der geregelten mittleren Spannung in Abhängigkeit von der Ladung des Generators erzeugen,
einem Leistungshalbleiter (T101), der in Serie zu einer Erregerwicklung (Le) des Generators geschaltet ist und durch den Ausgang der Verarbeitungs- und Vergleichseinrichtung umgeschaltet wird,
einem Freilaufhalbleiter (T108), der parallel zur Erregerwicklung des Generators geschaltet ist,
Korrektureinrichtungen (T102-T107, T109-T117), die in der Lage sind, eine Verschiebung des an den Verarbeitungs- und Vergleichseinrichtungen angelegten Spannungsbruchteils zu bewirken, wobei sich diese Verschiebung monoton mit der Stärke des Stroms in der Erregerwicklung und der Ladung des Generators ändert, so daß die besagte monotone Änderung durch die Verarbeitungseinrichtungen kompensiert und ein Mittelwert der Ladespannung erzielt wird, der über den gesamten Betriebsbereich des Generators im wesentlichen konstant ausfällt,
**dadurch gekennzeichnet**, daß die Korrektureinrichtungen aus Halbleiterbausteinen bestehen, die ohne Nebenwiderstand in Serie zur Erregerwicklung geschaltet sind, und zwar aus:
einem ersten Halbleiter (T102), der direkt mit dem genannten Leistungshalbleiter (T101) verbunden ist und durch den ein erster Schwachstrom fließen kann, der proportional zu dem Strom im Leistungshalbleiter ist,
einem zweiten Halbleiter (T109), der mit dem genannten Freilaufhalbleiter (T108) verbunden ist und durch den ein zweiter Schwachstrom fließen kann, der proportional zu dem Strom im Freilaufhalbleiter ist,
ersten und zweiten Bausteinen, die Stromspiegel bilden (T103-T106, T110-T113), welche die genannten ersten und zweiten Schwachströme aufnehmen, um sie jeweils zu kopieren, und
Bausteinen (T107, T115-T117), um die kopierten ersten und zweiten Schwachströme zu kombinieren, deren Ausgang mit dem Eingang der Verarbeitungs- und Vergleichseinrichtungen verbunden ist,
wobei die genannten Korrektureinrichtungen somit eine Verschiebung des an den Verarbeitungs- und Vergleichseinrichtungen anglegten Spannungsbruchteils herbeiführen, die sich linear mit dem Erregerstrom ändert.

2. Schaltung nach Anspruch 1 , **dadurch ge****kennzeichnet**, daß die ersten und zweiten Halbleiter (T102, T109) abwechselnd und periodisch von den jeweiligen genannten Schwachströmen durchflossen werden.

3. Schaltung nach Anspruch 1 oder 2 , **dadurch** **gekennzeichnet**, die Verarbeitungs- und Vergleichseinrichtungen ein aktives Tiefpaßfilter (A4) umfassen.

4. Schaltung nach Anspruch 3 , **dadurch ge****kennzeichnet**, daß die Verarbeitungs- und Vergleichseinrichtungen eine Integrierschaltung (A1), an der eine Bezugsspannung angelegt wird, und eine Vergleichsschaltung (A2) umfassen, an der eine Festschwellen-Spannung angelegt wird, wobei sich die Bezugsspannung der Integrierschaltung in Abhängigkeit vom Ausgangszustand der Vergleichsschaltung ändert.

5. Schaltung nach einem der Ansprüche 1 bis 4 , **da****durch gekennzeichnet**, daß der Leistungshalbleiter (T101) und der erste Halbleiter (T102) einerseits und der Freilaufhalbleiter (T108) und der zweite Halbleiter (T109) andererseits auf ein und derselben Halbleiterscheibe ausgeführt sind und eine große Anzahl von Zellen umfassen, von denen mindestens eine den ersten bzw. den zweiten Halbleiter bildet.

6. Schaltung nach einem der Ansprüche 1 bis 5 , **da****durch gekennzeichnet**, daß die Bausteine, um die kopierten ersten und zweiten Schwachströme zu kombinieren, eine Mischschaltung (T116, T117) umfassen.

7. Schaltung nach einem der Ansprüche 1 bis 6 , **da****durch gekennzeichnet**, daß die kombinierten ersten und zweiten Schwachströme am Mittelpunkt einer Teilerbrücke (R1-R3) entnommen werden, an der die zu regelnde Spannung (D+) angelegt wird.

8. Schaltung nach einem der Ansprüche 1 bis 7 , **dadurch gekennzeichnet**, daß die Verarbeitungs- und Vergleichseinrichtungen parallel die Leitung/Sperrung von zwei Transistoren (T6, T7) steuern, wobei der Kollektor eines ersten Transistors mit der zu regelnden Spannung über einen ersten Widerstand (R22) verbunden ist, während der Kollektor des zweiten Transistors mit dem Kollektor des ersten über einen zweiten Widerstand (R23) und mit einem Steuereingang des Leistungshalbleiters über einen dritten Widerstand (R24) verbunden ist.

9. Schaltung nach einem der Ansprüche 1 bis 8 , **da****durch gekennzeichnet**, daß die Verarbeitungs- und Vergleichseinrichtungen selbsttätig eine abnehmende Änderung der geregelten mittleren Spannung in Abhängigkeit von der Ladung des Generators erzeugen und daß die Korrektureinrichtungen selbsttätig eine geregelte Spannung erzeugen, die mit der Ladung des Generators zunimmt.

## Claims

1. Regulator circuit for the voltage for charging a battery by an alternator, especially in a motor vehicle, of the type comprising:
processing and comparison means (A4, A1, A2) receiving a defined fraction of a voltage (D+) delivered by the alternator and themselves generating a monotonic variation of the mean voltage regulated as a function of the load on the alternator,
a power semiconductor (T101) mounted in series with an excitation winding (Le) of the alternator and switched over by the output of the processing and comparison means,
a freewheel semiconductor (T108) mounted in parallel with the excitation winding of the alternator,
correction means (T102-T107, T109-T117) capable of producing an offset of the said voltage fraction applied to the processing and comparison means, the said offset varying monotonically with the intensity of the current in the excitation winding and the load on the alternator, in such a way as to compensate the said monotonic variation generated by the processing means and to obtain a mean value of the charging voltage which is essentially constant over all of the operating range of the alternator,
characterized in that the correction means consist of semiconductor means without shunt resistor in series with the excitation winding comprising:
a first semiconductor (T102) associated directly with the said power semiconductor (T101) and able to be traversed by a first small current proportional to the current in the power semiconductor;
a second semiconductor (T109) associated with the said freewheel semiconductor (T108) and able to be traversed by a second small current proportionoal to the current in the freewheel semiconductor;
first and second means forming current mirrors (T103-T106, T110-T113) receiving the said first and second small currents and recopying them, respectively, and
means (T107, T115-T117) for combining the first and second recopied small currents, the output of which is linked to the input of the processing and comparison means,
the said correction means thus providing an offset of the voltage fraction applied to the processing and comparison means which varies linearly with the excitation current.

2. Circuit according to Claim 1, characterized in that the first and second semiconductors (T102, T109) are traversed alternately and periodically by the said respective small currents.

3. Circuit according to Claim 1 or 2, characterized in that the processing and comparison means comprise an active low-pass filter (A4).

4. Circuit according to Claim 3, characterized in that the processing and comparison means comprise an integrator circuit (A1) to which is applied a reference voltage and a comparator circuit (A2) to which is applied a fixed threshold voltage, the reference voltage of the integrator circuit varying as a function of the output state of the comparator circuit.

5. Circuit according to one of Claims 1 to 4, characterized in that the power semiconductor (T101) and the first semiconductor (T102), on the one hand, and the freewheel semiconductor (T108) and the second semiconductor (T109), on the other hand, are produced on the same semiconductor chip and comprise a large number of cells at least one of which constitutes the first, respectively the second, semiconductor.

6. Circuit according to one of Claims 1 to 5, characterized in that the means for combining the first and second recopied small currents comprise a mixer circuit (T116, T117).

7. Circuit according to one of Claims 1 to 6, characterized in that the first and second small currents combined are subtracted at the midpoint of a divider bridge (R1-R3) to which the voltage to be regulated (D+) is applied.

8. Circuit according to one of Claims 1 to 7, characterized in that the processing and comparison means control the conduction/turning-off in parallel of two transistors (T6, T7), of which the collector of a first transistor is linked to the voltage to be regulated via a first resistor (R22), the collector of the second transistor being linked to the collector of the first via a second resistor (R23) and to a control input of the power semiconductor via a third resistor (R24).

9. Circuit according to one of Claims 1 to 8, characterized in that the processing and comparison means themselves generate a variation in the mean regulated voltage which decreases with the load on the alternator and in that the correction means themselves generate a regulated voltage which increases with the load on the alternator.
